(19) Europäisches Patentamt
European Patent Office
Office européen des brevets

(11) **EP 4 617 093 A1**

(12) **EUROPEAN PATENT APPLICATION**

(43) Date of publication:
**17.09.2025 Bulletin 2025/38**

(21) Application number: **25163549.6**

(22) Date of filing: **13.03.2025**

(51) International Patent Classification (IPC):
**B60K 11/02** *(2006.01)* **F01P 7/00** *(2006.01)*

(52) Cooperative Patent Classification (CPC):
**B60K 11/02; F01P 7/164;** B60K 2001/003;
B60Y 2400/785

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2024 IT 202400005842**

(71) Applicant: **IVECO S.P.A.**
**10156 Torino (IT)**

(72) Inventors:
• **VARWICK, Manuel**
**10156 TORINO (IT)**
• **DUSHEV, Alexander**
**10156 TORINO (IT)**

(74) Representative: **Studio Torta S.p.A.**
**Via Viotti, 9**
**10121 Torino (IT)**

(54) **CONTROL METHOD FOR CONTROLLING A CONDITIONING SYSTEM AND RELATED CONDITIONING SYSTEM**

(57)    Conditioning system (1) for cooling at least an user (2) in a vehicle via a conditioning fluid, comprising pump means (3) fluidly connected by a delivery conduit (4a) to user (2; 2', 2'') that is connected back to pump means (3) by a return conduit (4b), the conditioning system (1) comprising first sensor means (5a, 5a', 5a'') configured to detect a temperature of said conditioning fluid flowing into user (2; 2', 2") and second sensor means (5b, 5b', 5b'') configured to detect a temperature of said conditioning fluid flowing out user (2; 2', 2''), the conditioning system (1) comprising an electronic control unit (5) electrically designed to provide a control signal (I) to vary the mass flow (m) provided to the user (2, 2', 2") based on such temperature difference ($\Delta T$).

FIG. 1

**Description**

CROSS-REFERENCE TO RELATED APPLICATIONS

This patent application claims priority from Italian patent application no. 102024000005842 filed on March 15, 2024, the entire disclosure of which is incorporated herein by reference.

TECHNICAL FIELD

The present invention concerns a control method for controlling a conditioning system.

The present invention finds its preferred, although not exclusive, application in vehicular field. Reference will be made to this application by way of example below.

BACKGROUND OF THE INVENTION

As per se known, it is required to condition some operational systems of the vehicle during the operation of a vehicle. Example of such vehicular operational system are engine cooling system, transmission oil system or, in recent electric-traction vehicle, battery system, resistors or retarders etc.

Conditioning systems, as known, comprise a conditioning fluid that is make circulate within a heat exchanger to cool down or heat up the specific operational system. For instance, it is known that a cooling arrangement for the engine cooling system comprises a refrigerant fluid that is made circulate within a heat exchanger that allows heat exchange between the refrigerant fluid and the operational system/a related operational fluid.

The recirculation of the conditioning fluid is controlled by pump means that is programmed according to control maps stored in an electronic control unit.

Such control maps take into account several parameters such as heat dissipation of the components to be conditioned, pressure drops of the circuit, the configuration of the vehicle, the disposition of the operative systems, the physical characteristics of the conditioning fluid, the ageing of the pump and of the conditioning fluid.

Such parameters are derived by tests performed in climatic chambers. Therefore, the related costs for obtaining the aforementioned parameters for the control maps of the pump means are high.

Moreover, some among the above-mentioned parameters are difficultly detected since ageing of the pump means and of the conditioning fluid characteristics depends on multiple factors, such as the load condition during the use of the vehicle, that cannot be standardized.

Accordingly, the precision of existing control maps for pump means in conditioning system of operative systems in a vehicle is low.

Therefore, the need is felt to improve existing control systems for conditioning systems of operative system of a vehicle in order to reduce related costs and to improve the precision of the control.

An aim of the present invention is to satisfy the above mentioned needs in a cost-effective and optimized manner.

SUMMARY OF THE INVENTION

The aforementioned aim is reached by a control method and a conditioning system as claimed in the appended set of claims that are integral part of the present description.

BRIEF DESCRIPTION OF DRAWINGS

For a better understanding of the present invention, a preferred embodiment is described in the following, by way of a non-limiting example, with reference to the attached drawings wherein:

- Figure 1 is a schematic representation of a first embodiment of a conditioning system controlled by a control method according to the invention;
- Figure 2 is a schematic representation of a second embodiment of a conditioning system controlled by a control method according to the invention;
- Figure 3 is a schematic representation of a third embodiment of a conditioning system controlled by a control method according to the invention;
- Figure 4 is a schematic representation of a fourth embodiment of a conditioning system controlled by a control method according to the invention and
- Figure 5 is a flowchart showing different steps of a control method according to the invention.

DETAILED DESCRIPTION OF THE INVENTION

In the attached drawings, the reference number 1 discloses, in a simplified and exemplarily manner a conditioning system for conditioning a user 2 in a vehicle via circulation of a conditioning fluid.

In detail conditioning fluid can be treated to cool down or coop up the temperature of the user 2 according to the specific needs.

In detail, the conditioning fluid is a liquid, such as water, a mixture of water and another substance, such as glycol, oil or any suitable conditioning fluid.

In particular, the user 2 may be represented by an electric equipment, such as an electric machine, an inverter, an internal combustion engine, an EGR, electrical batteries. Therefore such user 2 is provided with a heat exchanger of any typology, such as a fluid heat exchanger, a fluid to fluid heat exchanger or a fluid to air heat exchanger to allow the heat exchange with the associated element.

The conditioning system 1 comprise essentially pump means 3 fluidly connected by a delivery conduit 4a and a return conduit 4b to the user 2 to provide the conditioning fluid and to collect the return fluid.

The conditioning system comprises first sensor means 5a configured to detect a physical value indicative of the temperature of the conditioning fluid entering in the user 2 and second sensor means 5b configured to detect a physical value indicative of the temperature of the conditioning fluid flowing out the user 2.

Such first and second means 5a, 5b comprise, for instance, temperature sensor means or any other sensor means configured to detect a physical value that can be connected to the temperature of the conditioning fluid flowing in and out the user 2.

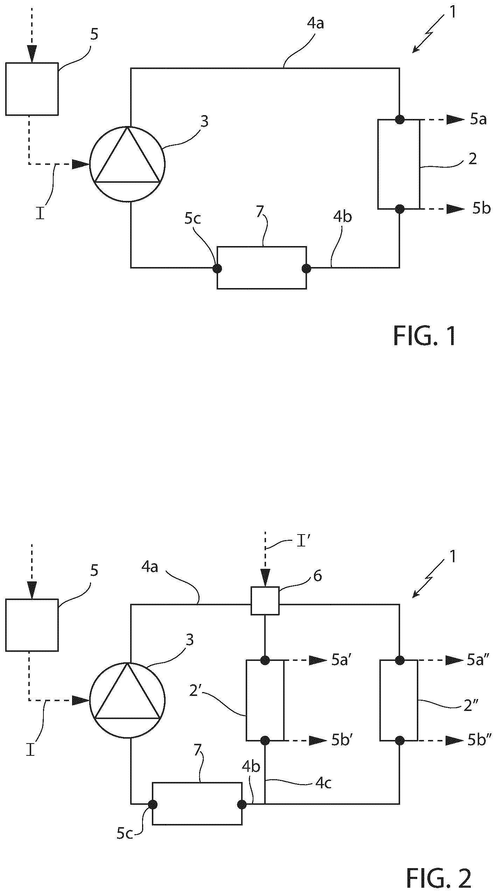

Figure 1 discloses a single-user conditioning system 1 therefore the above description applies therefore delivery conduit 4a fluidly connects pump means 3 to the user 2 that is fluidly connected back to pump means 3 by return conduit 4b.

Upstream to pump means 3 but downstream to user 2, the conditioning system 1 further comprises a heat exchanger 7, i.e. a heat exchanger, configured to reduce (or increase while heating up user 2) the temperature of the refrigerant fluid before sending the latter to pump means 3.

Third sensor means 5c can be provided at the output of the heat exchanger 7 to monitor the temperature of the refrigerant fluid flowing out from heat exchanger 7.

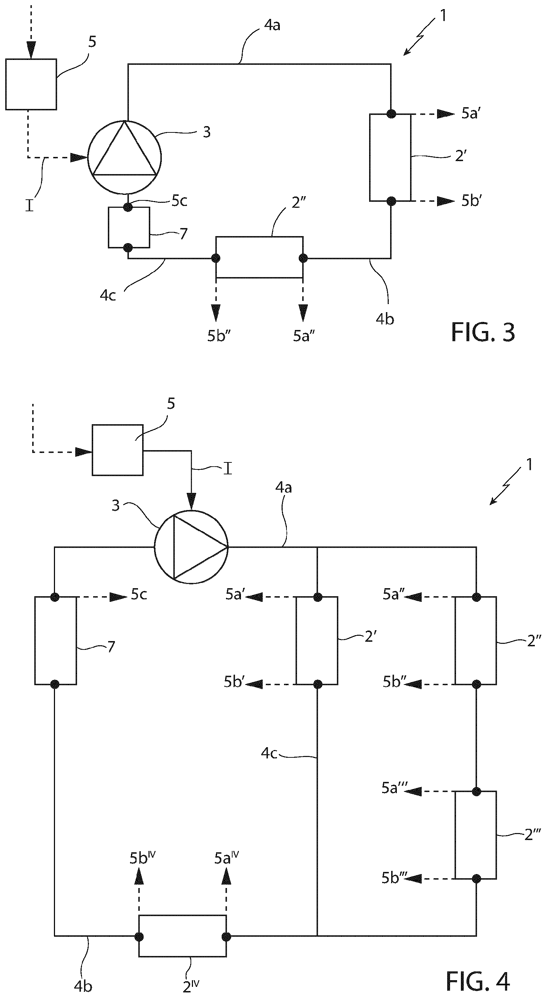

Figures 2 and 3 discloses exemplarily conditioning systems 1 comprising a plurality of users 2, respectively in fluidic parallel and in series.

In detail Figure 2 discloses two users 2', 2" one of which fluidly interposed on a by-pass conduit 4c that is fluidly in parallel to the conduits 4a, 4b and the other user 2". The conditioning system therefore comprises respective first and second sensor means 5a', 5b', 5a", 5b".

In particular, in such embodiment conditioning system 1 can comprise valve means 6 fluidly interposed between delivery and by-pass conduits 4a, 4c and configured to regulate the flow of conditioning fluid flowing therein.

Conversely, figure 3 discloses two users 2', 2'' fluidly interposed one to the other by a delivery, a return and an intermediate conduit 4a, 4b, 4c. The conditioning system therefore comprises respective first and second sensor means 5a', 5b', 5a", 5b".

In such embodiment, conditioning system 1 do not comprise valve means since all the fluid flowing in the first user 2' flows entirely in the second user 2".

In all the aforementioned embodiments, the conditioning system 1 comprises an electronic control unit 5 electrically connected to first and second sensor means 5a, 5b, 5a', 5b', 5a", 5b" and to pump means 3 and comprising elaboration means configured to receive the data retrieved by first and second sensor means 5a, 5b, 5a', 5b', 5a", 5b", elaborate this latter and provide a control signal I to control the operation of the pump means 3.

In case of the second embodiment comprising valve means 6, the electronic control unit is furthermore configured to provide a further control signal I' to control the valve means 6 on the base of the aforementioned elaboration.

The third embodiment, disclosed in figure 4, is a combination of the first and second embodiments, therefore discloses a series-parallel arrangement. In the disclosed arrangement, it is provided a parallel arrangement between a first user 2', and a pair of users 2", 2''' in series one with the other; the above disclosed parallel arrangement is further in fluidic series with a fourth user $2^{iv}$. Accordingly, related sensor means 5a', 5b', 5a", 5b", 5a''', 5b''', $5a^{iv}$, $5b^{iv}$ are provided.

In the embodiments of figures 2 to 4, the heat exchanger 7 is provided upstream to the pump means 3 and downstream to all plurality of users 2, 2', 2", 2'''.

The electronic control unit 5 is configured to memorize the following quantities:

- preset minimum and preset maximum difference of temperatures $\Delta Tmin$, $\Delta Tmax$ specific for the typology of user 2, 2', 2'' fluidly connected to the pump means 3 and
- heat capacity, cp, of the conditioning fluid.

If required by the user 2, the preset minimum and preset maximum difference of temperatures $\Delta Tmin$, $\Delta Tmax$ can be substituted by a limit case of the aforementioned interval, represented by a single preset value $\Delta Tset$.

The preset minimum and preset maximum difference of temperatures $\Delta Tmin$, $\Delta Tmax$ and the single preset value $\Delta Tset$ can be also memorized as look-up table or variable values in function of the environment temperature, i.e. the temperature wherein the at least one user 2 is placed, or, clearly, based on the cooling or heating modality of operation of the system.

The above differences of temperature stored in the electronic control unit 5 are related to the specific user 2 and usually provided by the provider of the user 2.

The electronic control unit 5 is designed to calculate a difference of temperature $\Delta T$ by the difference between the temperature retrieved by first and second sensor means 5a, 5b and compare such difference of temperature $\Delta T$ with respect to the stored preset minimum and preset maximum difference of temperatures $\Delta Tmin$, $\Delta Tmax$ or the single preset difference $\Delta Tset$.

If the difference of temperature $\Delta T$ exceeds the stored preset minimum and preset maximum difference of temperatures $\Delta Tmin$, $\Delta Tmax$ or is different with respect to the single preset difference $\Delta Tset$, then provide control signal I to the pump means 3 to vary the conditioning fluid mass flow within conduits 4a, 4b, 4c.

In detail, the mass flow of the conditioning circuit is elaborated via a thermal relationship that is function of the retrieved difference of temperature $\Delta T$ and its heat capacity cp.

In detail, the electronic control unit 5 has memorized the following thermic relationship:

$$Q = m * cp * \Delta T$$

Wherein:

- Q is the heat exchanged with the conditioning fluid;
- m is the mass flow of the conditioning fluid within conduits 4a, 4b, 4c;
- cp is the memorized value of the heat capacity of conditioning fluid; and
- $\Delta T$ is the aforementioned difference of temperature.

If the difference of temperature increases over or decreases below the stored preset minimum and preset maximum difference of temperatures $\Delta Tmin$, $\Delta Tmax$ or single preset difference $\Delta Tset$ indicate that excessive high or low heat Q is exchanged with the conditioning fluid.

Therefore, since the heat Q depends by the specific operation of the vehicle, and therefore should not be varied without varying the operation of the vehicle, it is possible to act to move the difference of temperature within stored preset minimum and preset maximum difference of temperatures $\Delta Tmin$, $\Delta Tmax$ or single preset difference $\Delta Tset$ by varying the mass flow m.

Accordingly, the control signal I is configured to control pump means 3 to vary the value of the mass flow m provide by this latter in the delivery conduit 4a. Such control signal I can control different aspects of the valve according to the typology, such as the speed of the pump means, in case of fixed displacement pump means or vary the displacement of the pump and/or its speed in case of variable displacement pump means.

In case of multiple users 2', 2'' that are fluidically in series, the electronic control unit 5 will elect the minimum between the stored preset minimum and preset maximum difference of temperatures $\Delta Tmin$, $\Delta Tmax$ or single preset difference $\Delta Tset$ of the users 2', 2''.

Similarly, the above may be performed in case of multiple users 2', 2'' that are fluidically in parallel. In case of the presence of valve means 6, the electronic control unit may control valve means 6 to partition the elaborated mass flow m in order to optimize the mass flow for both users.

In such case, the aforementioned thermic relationship will be elaborated for the first and the second users 2', 2'' and the difference of mass flow m to be provided to the first and second users 2', 2'' would be regulated by valve means 6.

It is noticed that in an advantageous embodiment, a first and second present minimum differences of temperature $\Delta Tmin$ and a first and second present maximum differences of temperature $\Delta Tmax$ can be stored so that:

- If the temperature is lower with respect the first minimum difference of temperature the pump is controlled to decrease its speed;
- If the temperature is comprised between the first and second minimum differences of temperature the pump is speed is hold;
- If the temperature is comprised between the first and second maximum differences of temperature the pump is controlled to increase its speed; and
- If the temperature is upper with respect the second maximum difference of temperature the pump is controlled to its maximum speed;

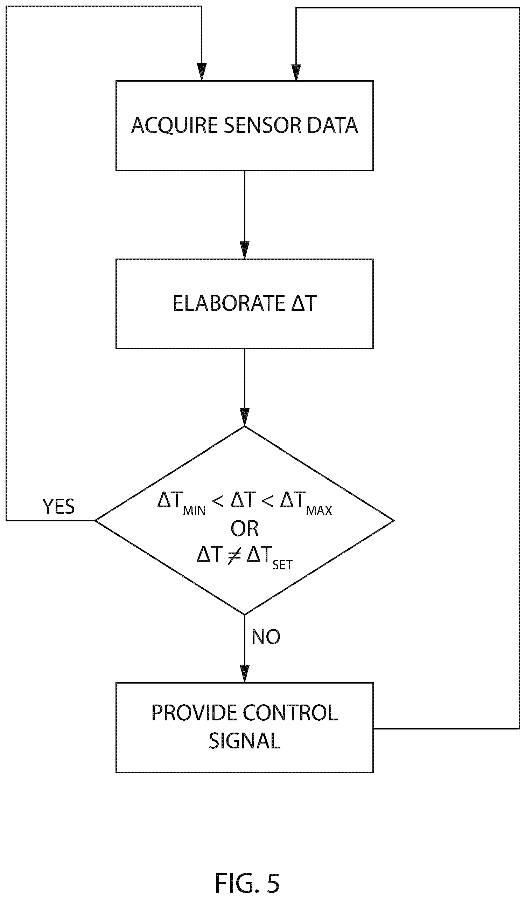

The operation of the embodiments of the invention as described above is the following with reference to the flowchart of Figure 5.

The electronic control unit 4 will continuously or at preset time intervals retrieve the data from first and second sensor means 5a, 5b and perform the above described calculation of the difference of temperature $\Delta T$ and compare such difference of temperature with stored preset minimum and preset maximum difference of temperatures $\Delta Tmin$, $\Delta Tmax$.

If the difference of temperature is comprised within the above defined interval, no action occurs, otherwise, the electronic control unit elaborate a control signal to control pump means 3 to vary the delivered mass flow m of the conditioning fluid to get the difference of temperature within the stored preset minimum and preset maximum difference of temperatures $\Delta Tmin$, $\Delta Tmax$.

The operation is analogous is a single preset value Tset is present instead of stored preset minimum and preset maximum difference of temperatures $\Delta Tmin$, $\Delta Tmax$.

In view of the above, the present invention relates to a control method for controlling a conditioning system as described above comprising the following steps:

i) Acquire data from first and second sensor means 5a, 5b;
ii) Elaborate a difference of the temperature $\Delta T$ by the acquired data at step i);
iii) Verify if the elaborated difference of temperature $\Delta T$ is comprised between stored preset minimum and preset maximum difference of temperatures $\Delta Tmin$, $\Delta Tmax$ or equal with respect to a single preset value Tset, if the difference of temperature is comprised therein, then return to step i), otherwise proceed to step iv);
iv) Elaborate a control signal I to the pump means 3 to vary the mass flow m of conditioning fluid provided to the user 2.

As detailed, above, the elaboration at step iv) is based on a thermic relationship that is function of the function of the retrieved difference of temperature $\Delta T$ and its heat capacity cp, in particular based on the below equation:

$$Q= m \ *cp*\Delta T$$

whose coefficient are detailed above and not repeated for sake of brevity.

In case of presence of valve means 6 configured to partition the fluid between different users 2', 2'' in fluidic parallel, then the step iv) can further comprises the elaboration of a further control signal I' to control said valve means 6 to divide the mass flow m between the users 2', 2''.

In view of the foregoing, the advantages of a control method and a conditioning system according to the invention are apparent.

The proposed control method and conditioning system are versatile and may be applied to any typology of vehicular conditioning system without need of complex and expensive test to produce control maps to be memorized in the control unit that control pump means.

Moreover, since the proposed control method allows a real-time or at least discretely continuous control, the proposed control method is more accurate than the existing ones.

In particular, any operational configuration or condition of the vehicle can affect the stability and efficiency of the control method since it is based on temperature data that are related to the current status of the user to be conditioned.

Indeed, once set, the conditioning system don't need any software change if the configuration of the vehicle vary.

Due to the absence of need of tests to produce control maps, the validation and release are simplified, with consequent cost savings.

The pump energetic balance is improved, since the pump is strictly controlled on the base of the real need of the user and not on the base of maps that could not comply with the real need of the user.

Furthermore, since ageing of the pump effects its capacity of providing mass flow towards the user, the control based on the temperature of the user allows to compensate ageing of the pump and of the cooling fluid.

It is clear that modifications can be made to the described control method and conditioning system which do not extend beyond the scope of protection defined by the claims.

For example, as said, pump means and user/s may be of any typology.

Furthermore, the thermic relationship linking the mass flow and the difference of temperature of the user may be different with respect to the above described.

In addition, the embodiments shown above may be combined, i.e. conditioning systems with different topologies comprising a combination of fluidic series and parallel between users may be clearly controlled by the control system of the present invention.

## Claims

1. Conditioning system (1) for cooling at least an user (2) in a vehicle via a conditioning fluid, said conditioning system (1) comprising pump means (3) fluidly connected by a delivery conduit (4a) to said user (2; 2', 2'') that is connected back to said pump means (3) by a return conduit (4b), said conditioning system (1) comprising first sensor means (5a, 5a', 5a'') configured to detect a temperature of said conditioning fluid flowing into said user (2; 2', 2'') and second sensor means (5b, 5b', 5b'') configured to detect a temperature of said conditioning fluid flowing out said user (2; 2', 2''), said conditioning system (1) comprising an electronic control unit (5) electrically connected to said first and second sensor means (5a, 5a', 5a'', 5b, 5b', 5b'') and to said pump means (3), said electronic control unit (5) comprising elaboration means configured to retrieved data from said first and second sensor means (5a, 5a', 5a'', 5b, 5b', 5b''), elaborate a temperature difference ($\Delta T$) between the data of the first and second sensor means (5a, 5a', 5a'', 5b, 5b', 5b''), said electronic control unit (5) being configured to elaborate said temperature difference and provide a control signal (I) to control said pump means (3) to vary the mass flow (m) provided to said user (2, 2', 2'') based on such temperature difference ($\Delta T$).

2. Conditioning system according to claim 1, wherein said control signal (I) is configured to vary the speed and/or displacement of said pump means (3).

3. Conditioning system according to claim 1 or 2, wherein said control signal (I) is elaborated on the base on a thermic relation between said difference of temperature ($\Delta T$) and said mass flow (m).

4. Conditioning system according to claim 3, wherein said thermic relation is the following:

$$Q= m \ *cp*\Delta T$$

wherein:

   • Q is a heat exchanged with the conditioning fluid;
   • m is the mass flow of the conditioning fluid circulating within conduits said conduits (4a, 4b; 4c)
   • cp is a value of the heat capacity of conditioning fluid; and
   • $\Delta T$ is said difference of temperature,

Said heat capacity (cp) value being memorized in said electronic control unit (5).

5. Conditioning system according to any of the preceding claims, wherein said control signal (I) is elaborated if said temperature difference (ΔT) is different with respect to a preset difference value (ΔTset).

6. Conditioning system according to of claims 1 to 5, wherein said control signal (I) is elaborated if said temperature difference (ΔT) exceeds with respect to preset minimum and preset maximum difference of temperatures (ΔTmin, ΔTmax).

7. Conditioning system according to claim 5 or 6, wherein said preset difference value (ΔTset) or said preset minimum and preset maximum difference of temperatures (ΔTmin, ΔTmax) are memorized in said control unit (5).

8. Conditioning system according to any of the preceding claims, wherein said conditioning system (1) comprises a plurality of users (2', 2") that are placed in fluidic series and/or in fluidic parallel one with respect to the other.

9. Conditioning system according to claim 8 when depending on claims 5 or 6, wherein said control signal (I) is elaborated if said temperature difference (ΔT) exceeds the minimum between said minimum and preset maximum difference of temperatures (ΔTmin, ΔTmax) or said preset difference value (ΔTset).

10. Conditioning system according to claim 8 or 9, wherein if said plurality of users (2', 2") are in fluidic parallel, said conditioning system (1) further comprise valve means (6) for partitioning said mass flow (m) between said users (2', 2") said electronic control unit (5) being configured to elaborate a second control signal (I") to control said valve means (6) in function of temperature differences (ΔT) of said users (2', 2").

11. Control method for controlling a conditioning system (1) according to any of the preceding steps comprising the following steps:

    i) Acquire data from first and second sensor means (5a, 5b);
    ii) Elaborate a difference of the temperature (ΔT) by the acquired data at step i);
    iii) Verify if the elaborated difference of temperature (ΔT) is comprised between stored preset minimum and preset maximum difference of temperatures (ΔTmin, ΔTmax) or equal with respect to a single preset value (Tset), if the difference of temperature is comprised therein, then return to step i), otherwise proceed to step iv);
    iv) Elaborate a control signal (I) to the pump means (3) to vary the mass flow m of conditioning fluid provided to the user (2).

12. Control method according to claim 11, wherein said elaboration at step iv) is based on a thermic relationship that is function of the function of the retrieved difference of temperature (ΔT) and its heat capacity (cp).

13. Control method according to claim 12, wherein said thermic relationship comprises the following equation:

$$Q= m *cp*\Delta T$$

wherein:

    • Q is a heat exchanged with the conditioning fluid;
    • m is the mass flow of the conditioning fluid circulating within conduits said conduits (4a, 4b; 4c)
    • cp is a value of the heat capacity of conditioning fluid; and
    • ΔT is said difference of temperature,

Said heat capacity cp value being memorized in said electronic control unit (5).

14. Control method according to claims 11 to 13, when dependent on claim 10, wherein step iv) further comprises the elaboration of a further control signal (I') to control said valve means (6) to divide the mass flow (m) provided by said pump means (3) between the users (2', 2").

15. Electronic control unit comprising elaboration means configured to execute the steps of the method according to claims 11 to 14, wherein said execution is performed continuously or at pre-set time intervals.

FIG. 1

FIG. 2

FIG. 3

FIG. 4

ACQUIRE SENSOR DATA

ELABORATE ΔT

$\Delta T_{MIN} < \Delta T < \Delta T_{MAX}$
OR
$\Delta T \neq \Delta T_{SET}$

YES

NO

PROVIDE CONTROL SIGNAL

FIG. 5

Europäisches
Patentamt
European
Patent Office
Office européen
des brevets

# EUROPEAN SEARCH REPORT

**Application Number**

EP 25 16 3549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 087 028 A (GOTO SOGO [JP]) 11 July 2000 (2000-07-11) * column 13, line 19 - line 47; figures 1,5 * | 1-9, 11-13,15 | INV. B60K11/02 F01P7/00 |
| X | US 2015/066263 A1 (ABIHANA OSAMA [US]) 5 March 2015 (2015-03-05) * paragraphs [0018], [0020]; figure 1 * | 1-7,15 | |
| X | US 9 242 548 B2 (HYUNDAI MOTOR CO LTD [KR]) 26 January 2016 (2016-01-26) * column 4, line 59 - line 65; figure 1 * * column 5, line 46 - line 54 * | 1,2,15 | |

**TECHNICAL FIELDS SEARCHED (IPC)**

B60K
F01P

The present search report has been drawn up for all claims

| Place of search | Date of completion of the search | Examiner |
|---|---|---|
| Munich | 30 April 2025 | Pecquet, Gabriel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 3549

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| US 6087028 | A | 11-07-2000 | DE | 19825286 A1 | 10-12-1998 |
| | | | JP | 3769882 B2 | 26-04-2006 |
| | | | JP | H10340734 A | 22-12-1998 |
| | | | US | 6087028 A | 11-07-2000 |
| US 2015066263 | A1 | 05-03-2015 | CN | 104420970 A | 18-03-2015 |
| | | | DE | 102014217142 A1 | 05-03-2015 |
| | | | US | 2015066263 A1 | 05-03-2015 |
| US 9242548 | B2 | 26-01-2016 | CN | 104100351 A | 15-10-2014 |
| | | | DE | 102013224398 A1 | 09-10-2014 |
| | | | KR | 101427955 B1 | 11-08-2014 |
| | | | US | 2014303838 A1 | 09-10-2014 |

EPO FORM P0459

For more details about this annex : see Official Journal of the European Patent Office, No. 12/82

**EP 4 617 093 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000005842